# EUROPÄISCHE PATENTSCHRIFT

(11) **EP 1 232 903 B1**
(45) Veröffentlichungstag und Bekanntmachung des Hinweises auf die Patenterteilung: **24.09.2003**
(21) Anmeldenummer: 01103401.4
(22) Anmeldetag: 14.02.2001
(51) Int. Cl.: B60P 1/44

(54) **Einrichtung zur Befestigung von Ladebordwandsystemen am Chassis-Rahmensystem von Anhängern, Sattelaufliegern und Fahrzeugen**
Device for attaching loading tailgate systems to the chassis frame system of trailers, semitrailers and vehicles
Dispositif pour la fixation de systèmes d'hayon élévateur au système de cadre de châssis de remorques, de semi remorques et de véhicules

(43) Veröffentlichungstag der Anmeldung: 21.08.2002
(73) Patentinhaber: Sörensen Hydraulik Zweigniederlassung, Ulfborg, Filial af Sörensen Hydraulik GmbH, Tyskland, 6990 Ulfborg (DK)
(72) Erfinder: Jensen, Jens Herman, 6990 Ulfborg (DK)
(74) Vertreter: Niedmers, Ole, Dipl.-Phys.

(56) Entgegenhaltungen:
- EP-A- 0 786 374
- WO-A-97/09197
- WO-A-98/08728
- GB-A- 1 268 958
- US-A- 3 534 874

## Beschreibung

Die Erfindung betrifft eine Einrichtung zur Befestigung von Ladebordwandsystemen am Chassis-Rahmensystem von Anhängern, Sattelaufliegern und Fahrzeugen, wobei das Rahmensystem wenigstens zwei voneinander beabstandete Träger umfaßt.

Wie bspw. in der gattungsbildenden EP-A-0 808 747 beschrieben, werden Ladebordwandsysteme, die als komplette Einheiten hergestellt werden können, mittels mehr oder weniger aufwendig konstruierter Einrichtungen am Chassis-Rahmensystem von Fahrzeugen befestigt. Die Hersteller von Fahrzeugen einerseits und die Hersteller von Ladebordwandsystemen andererseits sind regelmäßig verschieden, wobei auch für die Hersteller der Fahrzeuge genormte Abstände der im wesentlichen das Chassis-Rahmensystem bildenden beabstandeten Träger, an denen das Ladebordwandsystem zu befestigen ist, im allgemeinen bedauerlicherweise nicht existieren. Zwar ist es bei europäischen Fahrzeugherstellern schon zu einer gewissen Vereinheitlichung der Abstände der das Chassis-Rahmensystem bildenden Träger des Fahrzeugs gekommen, aber auch da weichen die Abstände bei unterschiedlichen Fahrzeuggrößen dennoch erheblich voneinander ab. Regelmäßig muß deshalb, wie eingangs erläutert, durch mehr oder weniger aufwendige Adaptionseinrichtungen eine individuelle Anpassung an die Abstände der Träger des Chassis-Rahmensystems erfolgen, um das Ladebordwandsystem über diese Adaptionseinrichtung bestimmungsgemäß an den Trägern befestigen zu können.

Bei von Zugfahrzeugen gezogenen Anhängern oder Sattelaufliegern, die mit Ladebordwandsystemen versehen werden sollen, sind die Abstände der auch dort ebenfalls im wesentlichen das Chassis-Rahmensystem bildenden Träger voneinander überhaupt nicht genormt. Einerseits unterscheiden sich die Trägerabstände bei Anhängern und Sattelaufliegern gegenüber den Abständen der Träger bei motorangetriebenen Zugfahrzeugen (Lastkraftwagen) sehr erheblich, andererseits ist der Abstand der Träger bei Anhängern und Sattelaufliegern gegenüber dem bei Motor angetriebenen Zugfahrzeugen regelmäßig erheblich größer ist. Aber auch die Abstände der Träger bei Anhängern und Sattelaufliegern variieren von Hersteller zu Hersteller, auch im europäischen Bereich, außerordentlich stark, so daß zusätzlich neben den aufwendigen Adaptionseinrichtungen, vgl. oben, auch aufwendige Tragkonstruktionen insbesondere bei Anhängern und Sattelaufliegern vorgesehen werden müssen, um die großen Abstände der Träger voneinander zu überbrücken. Diese Adaptionseinrichtungen und deren Anpassung zusätzlich zu die großen Abstände der Träger voneinander überbrückenden Tragkonstruktionen, an denen das Ladebordwandsystem über die Adaptionseinrichtung bestimmungsgemäß angebracht werden soll, sind regelmäßig individuell anzupassen bzw. vorzunehmen. Dieses geschieht teilweise bei den Herstellern von Anhängern und Sattelaufliegern, teilweise auch bei dem Hersteller der Ladebordwandsysteme selbst und ist mit erheblichem zeitlichen Aufwand verbunden, so daß die Kosten in diesem Zusammenhang vielfach bis in den Bereich der Bereitstellung des an sich komplexen kompletten Ladebordwandsystems gehen, was völlig unakzeptabel ist. In diesem Zusammenhang sind auch teilweise im Zuge der Anbringung des Ladebordwandsystems Veränderungen der Träger des Chassis-Rahmensystems der Anhänger und Sattelauflieger erforderlich, was ggf. auch zu einer Schwächung des Chassis-Rahmensystems führen kann. Selbst wenn dieses nicht der Fall sein sollte, ist aus Sicherheitsgründen immer eine technische Begutachtung und Abnahme durch Behörden und/oder derartige Maßnahmen begutachtende Überwachungsvereine erforderlich. Auch dadurch werden die Kosten für den Anbau von Ladebordwandsystemen an Anhängern und Sattelaufliegern beträchtlich erhöht.

Es ist somit Aufgabe der vorliegenden Erfindung eine Einrichtung der eingangs genannten Art zu schaffen, mit der auf einfache, schnelle Weise komplette Ladebordwandsysteme an Chassis-Rahmensystemen von Anhängern und Sattelaufliegern und auch Fahrzeugen befestigt werden können, ohne daß Rücksicht auf den Abstand der das Chassis-Rahmensystem im wesentlichen bildenden Träger genommen werden muß, wobei die Einrichtung einerseits schon bei den Herstellern der Anhängern, Sattelauflieger und Fahrzeugen schlechthin montiert werden können soll oder dieses erst im Zuge bei der Montage des Ladebordwandsystems an den Anhängern, Sattelaufliegern und Fahrzeugen dann vorgenommen werden können soll, wenn die Ladebordwandsysteme an anderen Orten durch andere Gewerke montiert werden soll, wobei die Einrichtung einfach im Aufbau und kostengünstig her- und bereitstellbar sein soll.

Gelöst wird die Aufgabe gem. der Erfindung durch ein entsprechend dem Abstand der Träger voneinander ver- bzw. einstellbares und an den Trägern befestigbares Traversenelement, an dem das Ladebordwandsystem befestigt ist.

Der Vorteil der erfindungsgemäßen Lösung besteht im wesentlichen darin, daß das Traversenelement längenverstellbar ausgebildet ist, so daß es an die unterschiedlichsten Abstände den Chassis-Rahmen von Anhängern, Sattelaufliegern und Fahrzeugen bildenden, voneinander beabstandeten Träger problemlos auf einfache und schnelle. Weise angepaßt werden kann, d.h., daß die unterschiedlichsten Abstände der Träger der unterschiedlichen Hersteller der Anhänger, Sattelauflieger und Fahrzeuge faktisch keine Rolle mehr spielen. Das längenverstellbare Traversenelement ist zudem bei äußerst einfacher Ausgestaltungsmöglichkeit kostengünstig bereitstellbar, da praktisch nur ein einheitliches Traversenelement hergestellt und bevorratet werden muß, was auch die Senkung der Kosten für die Herstellung und die Bereitstellung und Lagerhaltung zur Folge hat. Jeder Abstand der Träger eines Chassis-Rahmensystems handelsüblicher Anhänger, Sattelauflieger und Fahrzeuge kann damit überbrückt werden. Die aufwendigen Adaptionseinrichtungen und das Vorsehen von die Träger überspannenden Tragkonstruktionen, an denen die Adaptionseinrichtung wiederum befestigt werden muß, wie es im Stand der Technik bekannt ist, siehe oben, entfallen vollständig und es ist auch keine Veränderung der Träger als solche notwendig, um daran das Ladebordwandsystem anzubringen. Gem. einer vorteilhaften Ausgestaltung der Einrichtung besteht das Traversenelement aus wenigstens zwei voneinander beabstandeten Traversenträgern, womit auf einfache Weise durch entsprechend große Beabstandung der beiden Traversenträger voneinander die durch das Eigengewicht des Ladebordwandsystems einerseits und durch die darauf beim Betrieb des Ladebordwandsystems ruhende Last andererseits durch die daraus resultierenden Drehmomente verursachten Kräfte auf elegante Weise in die Träger des Chassis-Rahmensystems eingeleitet werden können.

Der Traversenträger kann vorzugsweise in Form von Rohren mit beliebiger Querschnittsform ausgebildet sein, es ist aber auch vorzugsweise möglich, die Traversenträger mit einem U-profilförmigen Querschnitt auszubilden, wobei die letztere Querschnittsform ein Maximum an Stabilität bei einem Minimum an Eigengewicht verwirklichen kann. U-profilförmige Halbzeuge oder Rohrhalbzeuge sind in allen Variationen und Dicken zur Verfügung stehend, so daß aufwendige Spezialkonstruktionen für die Ausbildung der Traversenträger nicht erforderlich sind mit der Folge, daß diese äußerst kostengünstig bereitstellbar sind und auch lediglich durch entsprechendes Ablängen herstellbar sind.

Die Längenverstellbarkeit des Traversenelements bzw. der das Traversenelement bildenden Traversenträgerelemente kann, wenn die Traversenträger bspw. in Form von Rohren ausgebildet sind, durch teleskopartiges Ineinandergreifen der Rohre erfolgen. Die Längenverstellbarkeit kann aber auch bspw. dann, wenn die Traversenträger U-profilförmig ausgebildet sind, dadurch erfolgen, daß die U-profilförmigen Trägerelemente durch entsprechende Dimensionierung ineinandergreifen, d.h. daß ein U-profilförmiges Trägerelement in der durch das U-profilförmige Trägerelement mit größerer innerer lichten Weite gebildeten Mulde bzw. Führung liegt und darin verschiebbar ist.

Bei einer weiteren besonders vorteilhaften Ausgestaltung der Einrichtung besteht der Traversenträger aus wenigstens zwei, insbesondere drei, zueinander verschiebbaren Traversenträgerelemente, so daß eine sehr einfache Ausrichtung des Ladebordwandsystems zur Einrichtung selbst möglich ist, da die Einrichtung über die Traversenelemente bzw. Traversenträgerelemente auf einfache Weise präzise mittig zwischen den beiden Trägern des Chassis-Rahmensystems des Anhängers, Sattelaufliegers oder Fahrzeugs positioniert werden kann.

Grundsätzlich ist es möglich, die Einrichtung auf beliebige geeignete Weise an den Trägern des Chassis-Rahmensystems zu befestigen, bspw. mittels Klemmen oder dgl. Vorzugsweise ist aber das Traversenelement an seinen beiden Enden mit einem Befestigungselement versehen, wobei dieses Befestigungselement bspw. nach Art eines Befestigungsflansches plattenförmig ausgebildet sein.

Obwohl es grundsätzlich möglich ist, über das Befestigungselement, nachdem der gewünschte Abstand zwischen den Trägern eingestellt ist, das Traversenelement durch Schweißung mit den Trägern zu verbinden, was allerdings nur unter speziellen Bedingungen zulässig ist, ist es sehr vorteilhaft, im Befestigungselement eine Mehrzahl von Löchern zur lösbaren Befestigung des Befestigungselements und damit des Traversenelements an den Trägern mittels Schraubverbindungen vorzusehen, wobei entsprechende Löcher schon auf Seiten der Hersteller der Anhänger, Sattelauflieger und Fahrzeuge an den Trägern vorgesehen werden können, es ist aber auch möglich, diese Löcher im Zuge des Anbaues der Einrichtung bzw. des Ladebordwandsystems an den Trägern vorzunehmen.

Bei einer weiteren anderen vorteilhaften Ausgestaltung der Einrichtung können am Traversenelement zwei voneinander beabstandete Verbindungselemente befestigt werden, über die das Ladebordwandsystem am Traversenelement selbst befestigbar ist, wobei diese Verbindungselemente schon selbst wiederum integrale Teile eines Hub-und/oder eines Klapptragwerks des Ladebordwandsystems sein können, wie es in der EP-A-0 808 747 beschrieben ist. Dadurch ist es auf elegante, gewichtssparende und fertigungstechnisch einfache Weise möglich, das Ladebordwandsystem selbst schon mit einem Teil der Einrichtung, nämlich bspw. einem mittleren Traversenträgerelement zu konfektionieren, d.h. daran die Verbindungselemente schon im Zuge der Fertigung des Ladebordwandsystems zu befestigen. Es brauchen dann lediglich nur noch, bei dreiteiliger Ausbildung der Traversenträger, die beiden äußeren Traversenträgerelemente, an denen die Befestigungselemente zur Befestigung am Rahmen des Anhängers, des Sattelaufliegers oder des Fahrzeugs befestigt sind, relativ zum mittleren Traversenelement entweder hineingeschoben bzw. an diesem längs verschoben werden, um den bestimmungsgemäßen Abstand der Träger voneinander zu erreichen.

Die vorangehend beschriebene lösbare Befestigung der Verbindungselemente des Ladebordwandsystems bzw. des Ladebordwandsystems in seiner Gesamtheit mit der Einrichtung über die o.e. Schraubverbindungen stellt nur eine Möglichkeit dar, die realisiert werden kann. Eine noch elegantere Ausgestaltung der Einrichtung sieht vorteilhafterweise vor, daß die Verbindungselemente bzw. das Ladebordwandsystem mittels Rastverbindungen, die mit entsprechenden Rastverbindungsaufnahmen auf dem Traversenelement zusammenwirken, mit dem Traversenelement lösbar verbindbar sind. Auf diese Weise kann bspw. völlig werkzeugfrei das Ladebordwandsystem mit der Einrichtung verbunden werden, nachdem die Einrichtung selbst schon an die Träger des Anhängers, Sattelaufliegers oder Fahrzeugs angepaßt und dort befestigt ist.

Bei der Ausgestaltung der Einrichtung, bei der die ladebordwandeigenen Verbindungselemente vorgesehen sind, können diese vorteilhafterweise über Schraubverbindungen mit dem Traversenelement verbunden werden, d.h. es ist nicht zwingend erforderlich, daß diese durch Schweißverbindungen mit dem Traversenelement verbunden werden. Diese Ausgestaltung gestattet eine einfachere Wartbarkeit des Ladebordwandsystems, wenn dieses bspw. aufgrund von Beschädigungen oder zu Wartungszwecken von der Einrichtung insgesamt gelöst werden soll.

Da in Längsrichtung der Traversenelemente verhältnismäßig geringe Kräfte auftreten und der Abstand der Träger des Chassis-Trägersystems durch anhängerseitige, aufliegerseitige oder fahrzeugseitige konstruktive Maßnahmen feststeht, sind zudem keine aufwendigen Maßnahmen erforderlich, um das Traversenelement bzw. die das Traversenelement bildenden Traversenträger in der einmal eingestellten Endstellung entsprechend dem Abstand der Träger zu halten. Es sind deshalb vorzugsweise an den Traversenelementen längs ihrer Längsausdehnung eine Mehrzahl von Löchern vorgesehen, über die die einzelnen Traversenträgerelemente bzw. Traversenträger in ihrer bzw. seiner Gesamtheit durch Einstellung des Abstandes gegenseitig fixierbar sind bzw. ist.

Die Erfindung wird nun unter Bezugnahme auf die nachfolgenden schematischen Zeichnungen anhand eines Ausführungsbeispieles eingehend beschrieben. Darin zeigen:
- Fig. 1: in perspektivischer Darstellung ein typisches Ladebordwandsystem, das mit der Einrichtung verbunden ist, unter Weglassung der ein Chassis-Rahmensystem eines Anhängers, Sattelaufliegers oder Fahrzeugs bildenden Träger,
- Fig. 2: in der Seitenansicht das hintere Teil eines Anhängers, Sattelaufliegers oder Fahrzeugs, an dem eine im Stand der Technik bekannte Adaptionseinrichtung vorgesehen ist, über die Ladebordwandsysteme bisher an derartigen Anhängern montiert werden,
- Fig. 3: in der Draufsicht eine Darstellung gem. Fig. 2, in der die Einrichtung gem. der Erfindung zwischen den beiden Trägern angedeutet ist,
- Fig. 4: eine Ansicht auf einen Anhänger von hinten zur Verdeutlichung des Abstandes der beiden das Chassis-Rahmensystem im wesentlichen bildenden beabstandeten Träger,
- Fig. 5: eine Ansicht auf das mit der Einrichtung verbundene Ladebordwandsystem in Richtung des Anhängerhinterteils,
- Fig. 6: eine Draufsicht auf das mit der Einrichtung verbundene Ladebordwandsystem,
- Fig. 7: eine Seitenansicht der in Fig. 6 dargestellten Verbindung aus Einrichtung und Ladebordwandsystem,
- Fig. 8: das aus drei Traversenträgerelementen jeweils bestehende Traversenträgerelement in teilweise auseinandergezogener perspektivischer Darstellung
- Fig. 9: eine Ansicht der Einrichtung gem. Fig. 8 im auf den Abstand der Träger eingestellten Endstellung und mit zur Verdeutlichung teilweise mit den Verbindungselementen versehenen Hub- und Klappelementen.

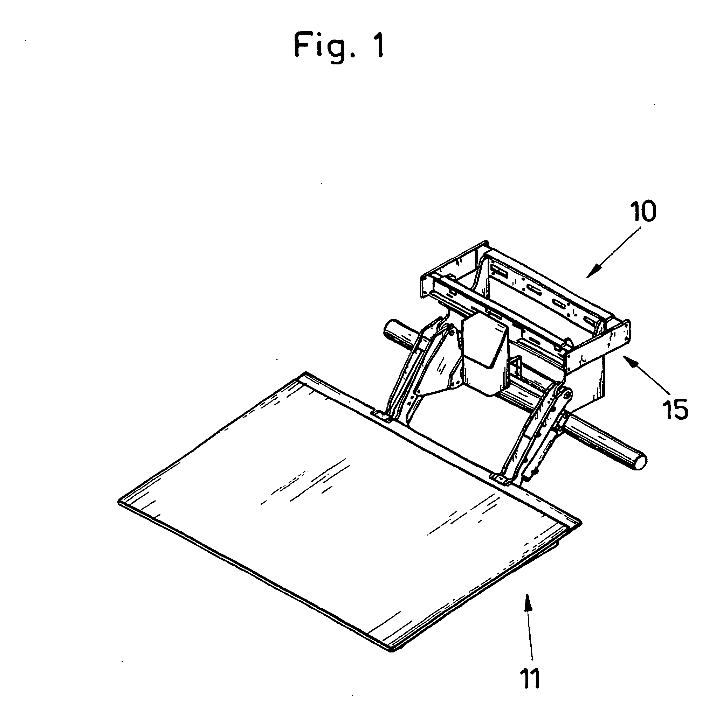

Es wird zunächst Bezug genommen auf die Darstellung von Fig. 1, in der ein Ladebordwandsystem 11 mit typischem Aufbau dargestellt ist, das mit der Einrichtung 10 verbunden ist. Ein Anhänger, Sattelauflieger oder ein Fahrzeug 13, an dem das Ladebordwandsystem 11 über die Einrichtung 10 am Chassis-Rahmensystem 12 angeordnet ist, ist aus Übersichtlichkeitsgründen in Fig. 1 nicht dargestellt. Das Ladebordwandsystem 11 ist in bezug auf Aufbau und Funktion beispielhaft in der DE-A-0 808 747 dargestellt, so daß darauf in vollem Umfange Bezug genommen wird.

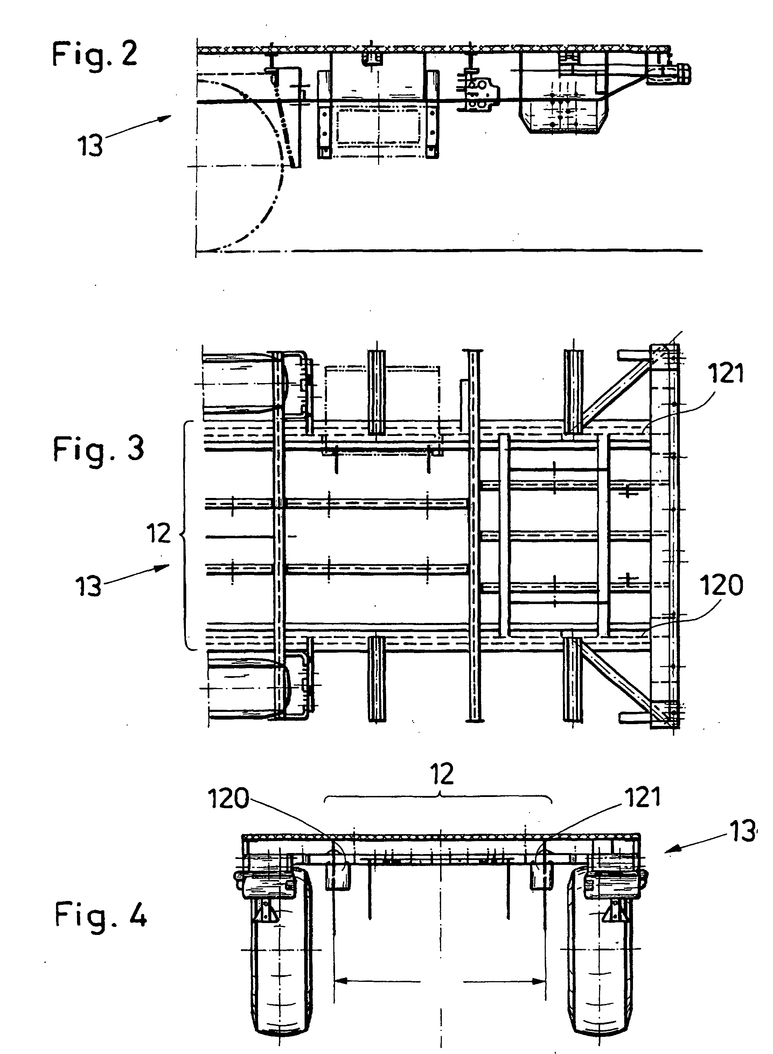

Die Fig. 2 bis 4 zeigen schematisch unter Weglassung der eigentlichen Ladefläche den hinteren Bereich eines Anhängers, Sattelaufliegers oder Fahrzeugs 13, an dem die Einrichtung 10 befestigbar ist. Zur Klarstellung bzw. Begriffsbildung wird darauf hingewiesen, daß die Einrichtung 10 generell an einen Anhänger, einen Sattelauflieger oder ein Fahrzeug 13 angebaut werden kann, d.h.,daß diese Begriffe lediglich beispielhaft zu verstehen sind, denn die Einrichtung 10 kann grundsätzlich an alle Fahrzeuge, ob nun selbst angetrieben oder antriebslos gezogen, angebaut werden.

Die Einrichtung 10 wird am Chassis-Rahmensystem 12 des Fahrzeugs 13 befestigt. Das Chassis-Rahmensystem 12 umfaßt im wesentlichen zwei voneinander beabstandete Träger 120, 121, vgl. Fig. 3 und 4. Die beiden Träger sind in einem bestimmten Maß voneinander beabstandet 14. Der Abstand 14 ist bspw. bei Anhängern und Sattelaufliegern i.d.R. - aber nicht zwingend - größer als bei motorgetriebenen Fahrzeugen wie LKW und Zugmaschinen für Sattelauflieger. In allen Fällen variiert der Abstand 14 aber regelmäßig von Hersteller zu Hersteller bei den Anhängern, Sattelaufliegern und teilweise auch bei den Fahrzeugen 13. Deswegen erfolgt die Befestigung des Ladebordwandsystems 11 über die hier beschriebene Einrichtung 10, die variabel an die unterschiedlichen Abstände 14 der Träger 120, 121 auf einfache Weise angepaßt werden kann. Dazu umfaßt die Einrichtung 10 ein in seiner Länge ver- und einstellbares Traversenelement.

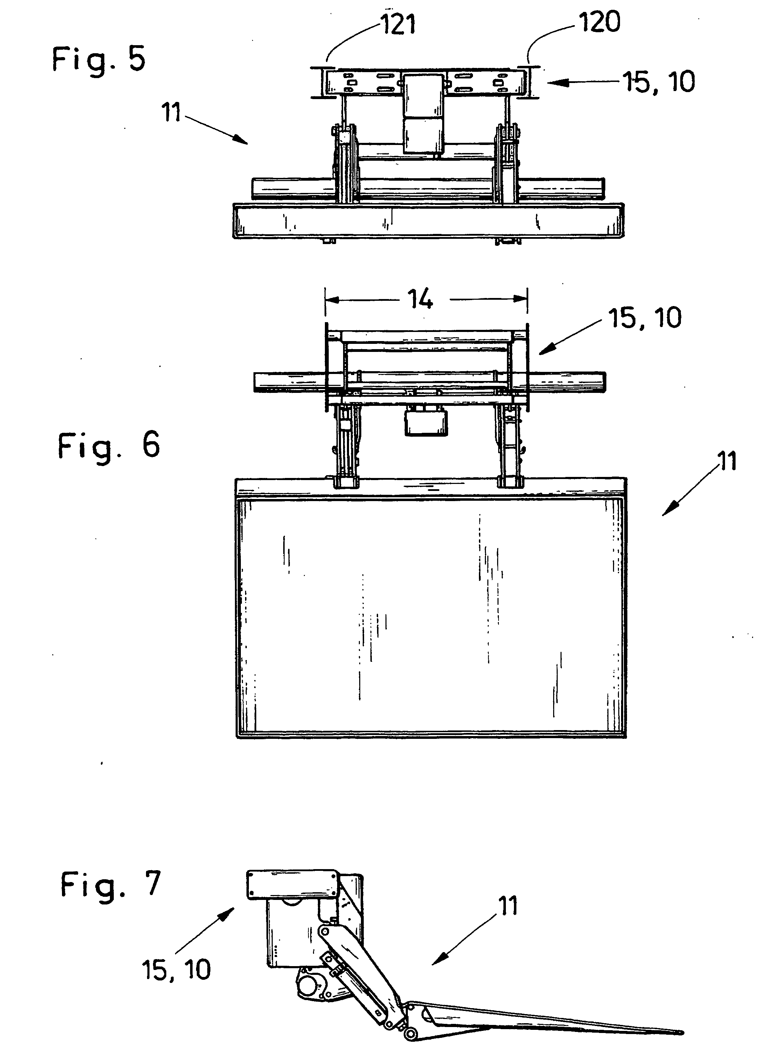

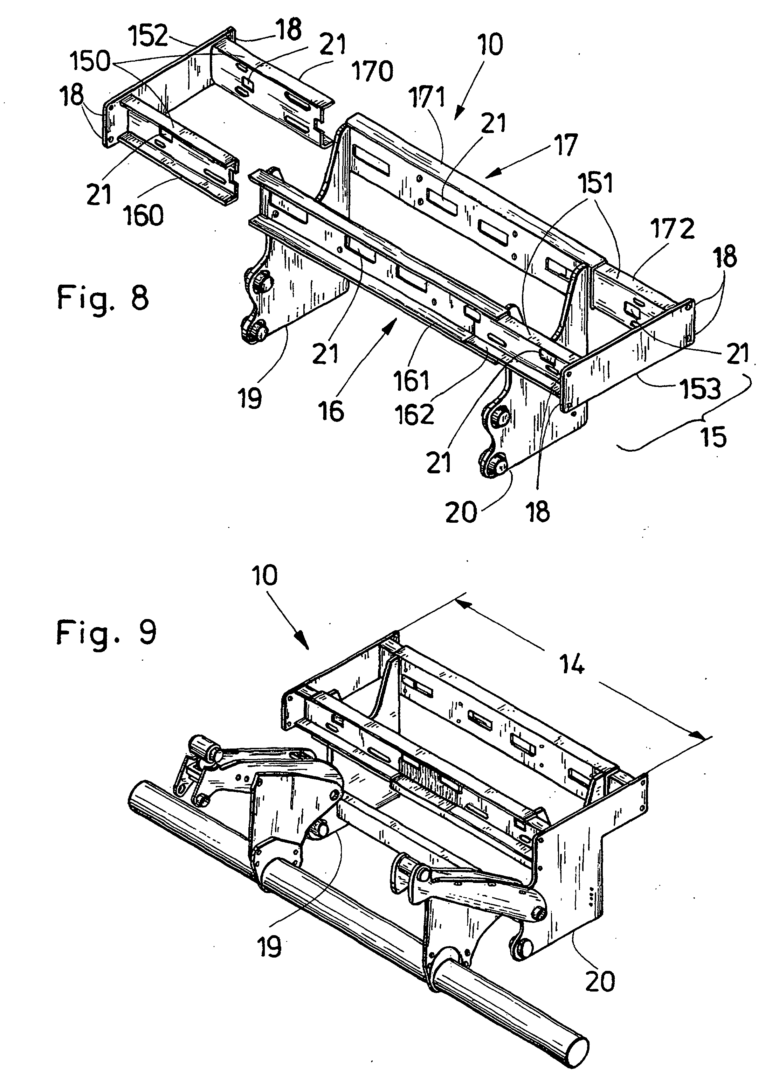

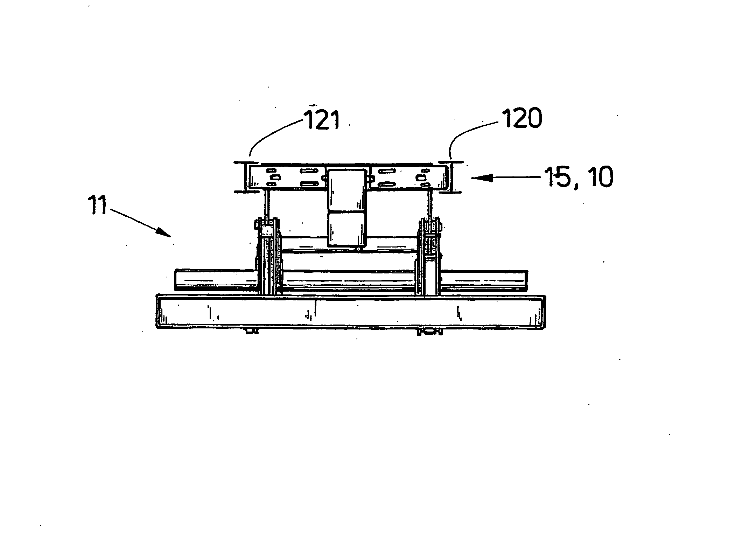

Das Traversenelement besteht bei der hier betriebenen und in den Fig. 1 bis 9 dargestellten Ausführungsform aus zwei Traversenträgern 16, 17. Die Traversenträger 16, 17 sind selbst im wesentlichen parallel voneinander beabstandet, vgl. die Fig. 8 und 9. Die Traversenträger weisen hier einen U-profilförmigen Querschnitt auf und bestehen aus drei zueinander verschiebbaren Traversenträgerelementen 160, 161, 162 bzw. 170, 171, 172. Die Traversenträger 16, 17 bzw. die Traversenträgerelemente 160, 161, 162, bzw. 170, 171, 172 sind so dimensioniert, daß sie relativ zueinander ineinandergreifend bzw. ineinandergleitend verschiebbar sind. Die äußeren Traversenträgerelemente 160, 170 bzw. 162, 172 sind mit einem sie an ihren beiden Enden 150, bzw. 151 abschließenden und sie verbindenden Befestigungselementen 152, 153 versehen. Die Befestigungselemente 152, 153 sind hier plattenförmig ausgebildet und weisen eine Mehrzahl von Löchern 18 auf, über die sie mittels hier nicht dargestellter Schrauben bzw. Bolzenverbindungen mit den Trägern 120, 121 des Fahrzeugs 13 verbunden werden können, vgl. Fig. 5. Es ist grundsätzlich möglich, Befestigungselemente 152, 153 an den Enden 150, 151 der jeweiligen Traversenträgerelemente 160, 170 bzw. 162, 172 vorzusehen, die jeweils separat ausgebildet sind, d.h. die beiden Traversenträgerelemente 160, 170 bzw. 162, 172 nicht miteinander verbinden.

Wie in den Figuren dargestellt, sind an dem Traversenelement 15 bzw. den das Traversenelement 15 bildenden Traversenträgern 16, 17 Verbindungselemente 19, 20 angebracht, die die eigentliche Verbindung zum Ladebordwandsystem 11, vgl. auch die Fig. 1, sowie 5 bis 7, herstellen. Die Verbindungselemente 19, 20 können Teil des im wesentlichen parallelogrammförmigen Hub- und/oder Klapparmsystems sein, wobei das Hub- bzw. Klapparmsystem wenigstens jeweils einen Hub- bzw. Klappaktuator umfaßt, wie es beispielhaft in der EP-A-0 808 747 beschrieben worden ist.

Die Verbindungselemente 19, 20 bilden somit einen Teil des Ladebordwandsystems 11 und können mittels Schraubverbindungen lösbar mit dem Traversenelement 15 bzw. den das Traversenelement 15 bildenden Traversenträgern 16, 17 verbunden werden. Es ist aber auch möglich, die Verbindungselemente 19, 20 durch Schweißverbindungen mit den Traversenträgern 16, 17 zu verbinden.

Es ist auch möglich, an dem Traversenelement 15 bzw. den das Traversenelement 15 hier beispielhaft bildenden beiden voneinander beabstandeten Traversenträgern 16, 17 Rastverbindungen oder Rastverbindungsaufnahmen vorzusehen, die mit entsprechenden Rastverbindungen bzw. Rastverbindungsaufnahmen, die an den Verbindungselementen 19, 20 des Ladebordwandsystems 11 ausgebildet sind, lösbar verbindbar zusammenwirken, so daß das gesamte Ladebordwandsystem 11 nach der Montage der Einrichtung 10 an den Trägern 120, 121 des Fahrzeugs 13 werkzeugfrei über die Rastverbindungen bzw. Rastverbindungsaufnahmen eingehängt und durch Einrastung befestigt werden kann. Diese Ausgestaltung der Einrichtung ist insbesondere dann von außerordentlichem Vorteil, wenn das Ladebordwandsystem zu Wartungs- und/oder Reparaturzwecken von der Einrichtung 10 bzw. dem Fahrzeug 13 entfernt werden muß. Die vorbeschriebene Ausgestaltung der Einrichtung 10 ist hier nicht gesondert dargestellt.

Die Traversenträgerelemente 160, 161, 162 bzw. 170, 171, 172 weisen längs ihrer Längsausdehnung eine Mehrzahl von Löchern 21 auf. Über diese Löcher 21 können die Traversenträgerelemente 160, 161, 162 bzw. 170, 171, 172 kraftschlüssig miteinander verbunden werden, nachdem der Abstand 14 zwischen den beiden Trägern 120, 121 des Fahrzeugs 13 eingestellt ist. Durch entsprechendes Lösen der Fixiermittel kann die Einrichtung 10 nach entsprechendem Lösen der Befestigungsmittel, mit denen die Befestigungselemente 152, 153 an den Trägern 120, 121 befestigt sind, wiederum vom Fahrzeug 13 entfernt werden.

### Bezugszeichenliste:

- 10: Einrichtung
- 11: Ladebordwandsystem
- 12: Chassis-Rahmensystem
- 120: Träger
- 121: Träger
- 13: Anhänger, Sattelauflieger, Fahrzeug
- 14: Abstand
- 15: Traversenelement
- 150: Ende
- 151: Ende
- 152: Befestigungselement
- 153: Befestigungselement
- 16: Traversenträger
- 160: Traversenträgerelement
- 161: Traversenträgerelement
- 162: Traversenträgerelement
- 17: Traversenträger
- 170: Traversenträgerelement
- 171: Traversenträgerelement
- 172: Traversenträgerelement
- 18: Loch
- 19: Verbindungselement
- 20: Verbindungselement
- 21: Loch

## Patentansprüche

1. Einrichtung (10) zur Befestigung von Ladebordwandsystemen (11) am Chassis-Rahmensystem (12) von Anhängern, Sattelaufliegern und Fahrzeugen (13), wobei das Rahmensystem (12) wenigstens zwei voneinander beabstandete Träger (120, 121) umfaßt, **gekennzeichnet durch** ein entsprechend dem Abstand (14) der Träger (120, 121) voneinander ver- bzw. einstellbares und an den Trägern (120, 121) befestigbares Traversenelement (15), an dem das Ladebordwandsystem (11) befestigbar ist.

2. Einrichtung nach Anspruch 1, **dadurch gekennzeichnet, daß** das Traversenelement (15) aus wenigstens zwei voneinander beabstandeten Traversenträgern (16, 17) besteht.

3. Einrichtung nach Anspruch 2, **dadurch gekennzeichnet, daß** die Traversenträger (16, 17) in Form von Rohren ausgebildet sind.

4. Einrichtung nach Anspruch 2, **dadurch gekennzeichnet, daß** die Traversenträger (16, 17) einen U-profilförmigen Querschnitt aufweisen.

5. Einrichtung nach einem oder mehreren der Ansprüche 2 bis 4, **dadurch gekennzeichnet, daß** der Traversenträger (16, 17) aus wenigstens zwei zueinander verschiebbaren Traversenträgerelementen (160, 161, 162; 170, 171, 172) besteht.

6. Einrichtung nach Anspruch 5, **dadurch gekennzeichnet, daß** die Traversenträgerelemente (160, 161, 162; 170, 171, 172) ineinandergreifen.

7. Einrichtung nach einem oder mehreren der Ansprüche 1 bis 6, **dadurch gekennzeichnet, daß** das Traversenelement (15) an seinen beiden Enden (150, 151) mit einem Befestigungselement (152, 153) versehen ist.

8. Einrichtung nach Anspruch 7, **dadurch gekennzeichnet, daß** das Befestigungselement (152, 153) derart ausgestaltet ist, daß es beide Traversenträger (16, 17) miteinander verbindet.

9. Einrichtung nach einem oder beiden des Anspruches 7 oder 8, **dadurch gekennzeichnet, daß** das Befestigungselement (152, 153) plattenförmig ausgebildet ist.

10. Einrichtung nach Anspruch 7, **dadurch gekennzeichnet, daß** das Befestigungselement (152, 153) eine Mehrzahl von Löchern (17) zur lösbaren Befestigung mittels Schraubverbindungen an den Trägern (120, 121) aufweist.

11. Einrichtung nach einem oder mehreren der Ansprüche 1 bis 8, **dadurch gekennzeichnet, daß** am Traversenelement (15) zwei voneinander beabstandete Verbindungselemente (19, 20) befestigbar sind, über die das Ladebordwandsystem (11) am Traversenelement (15) befestigbar ist.

12. Einrichtung nach Anspruch 9, **dadurch gekennzeichnet, daß** die Verbindungselemente (19, 20) Teil des Ladebordwandsystems (11) sind.

13. Einrichtung nach einem oder beiden der Ansprüche 9 oder 10, **dadurch gekennzeichnet, daß** die Verbindungselemente (19, 20) mittels Rastverbindungen oder Rastverbindungsaufnahmen, die mit den entsprechenden Rastverbindungsaufnahmen oder Rastverbindungen auf dem Traversenelement (15) zusammenwirken, mit dem Traversenelement (15) lösbar verbindbar sind.

14. Einrichtung nach einem oder mehreren der Ansprüche 9 bis 11, **dadurch gekennzeichnet, daß** die Verbindungselemente (19, 20) über Schraubverbindungen lösbar mit dem Traversenelement (15) verbindbar sind.

15. Einrichtung nach einem oder mehreren der Ansprüche 5 bis 12, **dadurch gekennzeichnet, daß** die Traversenträgerelemente (160, 161, 162; 170, 171, 172) längs ihrer Längsausdehnung eine Mehrzahl von Löchern (21) aufweisen, über die die Traversenträgerelemente (160, 161, 162; 170, 171, 172) bzw. der Traversenträger (16, 17) nach Einstellung des Abstandes (14) gegenseitig fixierbar sind.

## Claims

1. Device (10) for attaching tailgate loading systems (11) to the chassis-frame system (12) of trailers, semi-trailers and vehicles (13), in which the frame system (12) has at least two supports (120, 121) spaced at a distance apart from one another, **characterised by** a cross-piece element (15) which can be attached to the supports (120, 121) and displaced and adjusted depending on the distance (14) between the supports (120, 121), to which the tailgate loading system (11) is attached.

2. Device as claimed in claim 1, **characterised in that** the cross-piece element (15) consists of at least two cross-piece supports (16, 17) spaced at a distance apart from one another.

3. Device as claimed in claim 2, **characterised in that** the cross-piece supports (16, 17) are provided in the form of tubes.

4. Device as claimed in claim 2, **characterised in that** the cross-section of the cross-piece supports (16, 17) is a U-shaped section.

5. Device as claimed in one or more of claims 2 to 4, **characterised in that** the cross-piece support (16, 17) is made from at least two cross-piece support elements (160, 161, 162; 170, 171, 172) which are displaceable relative to one another.

6. Device as claimed in claim 5, **characterised in that** the cross-piece support elements (160, 161, 162; 170, 171, 172) engage in one another.

7. Device as claimed in one or more of claims 1 to 6, **characterised in that** the cross-piece element (15) is provided with a fixing element (152, 153) at its two ends (150, 151).

8. Device as claimed in claim 7, **characterised in that** the fixing element (152, 153) is designed to join the two cross-piece supports (16, 17) to one another.

9. Device as claimed in one or both of claims 7 or 8, **characterised in that** the fixing element (152, 153) is plate-shaped.

10. Device as claimed in claim 7, **characterised in that** the fixing element (152, 153) has a plurality of orifices (17) for detachably mounting it on the supports (120, 121) by means of screw connections.

11. Device as claimed in one or more of claims 1 to 8, **characterised in that** two connecting elements (19, 20) can be attached to the cross-piece element (15) at a distance apart from one another, by means of which the tailgate loading system (11) can be attached to the cross-piece element (15).

12. Device as claimed in claim 9, **characterised in that** the connecting elements (19, 20) are part of the loading tailgate wall system (11).

13. Device as claimed in one or both of claims 9 or 10, **characterised in that** the connecting elements (19, 20) can be removably connected to the cross-piece element (15) by means of catch connections or catch connection seatings which co-operate with the matching catch connection seatings or catch connections on the cross-piece element (15).

14. Device as claimed in one or more of claims 9 to 11, **characterised in that** the connecting elements (19, 20) may be connected to the cross-piece element (15) by means of screw connections.

15. Device as claimed in one or more of claims 5 to 12, **characterised in that** the cross-piece elements (160, 161, 162; 170, 171, 172) have a plurality of orifices (21) along their longitudinal extension, by means of which the cross-piece support elements (160, 161, 162; 170, 171, 172) and the cross-piece supports (16, 17) can be mutually fixed after adjusting the distance (14).

## Revendications

1. Dispositif (10) de fixation de systèmes de hayons élévateurs (11) sur des systèmes de châssis (12) de remorques, de semi-remorques et de véhicules (13), moyennant quoi le système de châssis (12) comprend au moins deux supports (120, 121) distants entre eux, **caractérisé par** un élément de traverse (15) pouvant être déplacé ou réglé en fonction de la distance (14) des supports (120, 121) entre eux et pouvant être fixé sur les supports (120, 121), sur lequel le système de hayon élévateur (11) peut être fixé.

2. Dispositif selon la revendication 1, **caractérisé en ce que** l'élément de traverse (15) est constitué d'au moins deux supports de traverse (16, 17) distants entre eux.

3. Dispositif selon la revendication 2, **caractérisé en ce que** les supports de traverse (16, 17) ont une forme tubulaire.

4. Dispositif selon la revendication 2, **caractérisé en ce que** les supports de traverse (16, 17) ont une section en forme de U.

5. Dispositif selon l'une ou plusieurs des revendications 2 à 4, **caractérisé en ce que** le support de traverse (16, 17) est constitué d'au moins deux éléments de support de traverse (160, 161, 162; 170, 171, 172) pouvant être déplacés l'un par rapport à l'autre.

6. Dispositif selon la revendication 5, **caractérisé en ce que** les éléments de support de traverse (160, 161, 162; 170, 171, 172) s'emboîtent les uns dans les autres.

7. Dispositif selon l'une ou plusieurs des revendications 1 à 6, **caractérisé en ce que** l'élément de traverse (15) est muni, au niveau de ses deux extrémités (150, 151), d'un élément de fixation (152, 153).

8. Dispositif selon la revendication 7, **caractérisé en ce que** l'élément de fixation (152, 153) est conçu de telle sorte qu'il relie les deux supports de traverse (16, 17) entre eux.

9. Dispositif selon l'une ou plusieurs des revendications 7 ou 8, **caractérisé en ce que** l'élément de fixation (152, 153) a la forme d'une plaque.

10. Dispositif selon la revendication 7, **caractérisé en ce que** l'élément de fixation (152, 153) comporte une pluralité de trous (17) pour la fixation amovible à l'aide de liaisons vissées sur les supports (120, 121).

11. Dispositif selon l'une ou plusieurs des revendications 1 à 8, **caractérisé en ce que** deux éléments de raccordement (19, 20), par l'intermédiaire desquels le système de hayon élévateur (11) peut être fixé sur l'élément de travers (15), peuvent être fixés sur l'élément de traverse (15).

12. Dispositif selon la revendication 9, **caractérisé en ce que** les éléments de raccordement (19, 20) font partie du système de hayon élévateur (11).

13. Dispositif selon l'une ou plusieurs des revendications 9 ou 10, **caractérisé en ce que** les éléments de raccordement (19, 20) peuvent être reliés de manière amovible à l'élément de traverse (15) à l'aide de raccordements d'encliquetage ou de logements de raccordements d'encliquetage qui interagissent avec des logements de raccordements d'encliquetage et des raccordements d'encliquetage sur l'élément de traverse (15).

14. Dispositif selon l'une ou plusieurs des revendications 9 à 11, **caractérisé en ce que** les éléments de raccordement (19, 20) peuvent être reliés amovible à l'élément de traverse (15) à l'aide de liaisons vissées.

15. Dispositif selon l'une ou plusieurs des revendications 5 à 12, **caractérisé en ce que** les éléments de support de traverse (160, 161 162; 170, 171, 172) comportent, le long de leur axe longitudinal, une pluralité de trous (21) grâce auxquels les éléments de support de traverse (160, 161, 162; 170, 171, 172) ou les supports de traverse (16, 17) peuvent être fixés en face l'un de l'autre après le réglage de l'intervalle (14).
